# EUROPEAN PATENT APPLICATION

(11) **EP 1 770 996 A2**
(43) Date of publication of application: **04.04.2007**
(21) Application number: 06121436.7
(22) Date of filing: 28.09.2006
(51) Int. Cl.: H04N 5/445

(54) **Recording apparatus**

(30) Priority: 28.09.2005 JP 2005281214
(71) Applicant: ORION ELECTRIC CO., Ltd., Takefu-shi, Fukui 915-8555 (JP)
(72) Inventor: Aoki, Hirotsugu, Echizen-city Fukui 915-8555 (JP)
(74) Representative: TBK-Patent

(57) **Abstract**

With the present invention, based on prescribed characteristic information of an event scheduled to be recorded being entered and set via a key entry unit 2 before receiving an electronic program guide listing program information of a program of the event scheduled to be recorded, an event determining unit 9 searches for and specifies reception of program information of a program of the event based on similarity between the characteristic information and program information in a latest received electronic program guide, making programmed recording possible of a program of the event based on the specified program information, thereby allowing recording by advance presetting of a program of an event scheduled to be recorded whose broadcast channel and time are unknown, before being listed in the electronic program guide.

## Description

### BACKGROUND OF THE INVENTION

### 1. Field of the Invention

The present invention relates to a recording apparatus capable of programmed recording of programs on a storage medium based on program information in received electronic program guides, and more particularly relates to improvements to programmed recording.

### 2. Description of the Related Art

Some recording apparatuses, such as digital video recorders which use a large-capacity storage medium for recording video such as a hard disk or a writable DVD or video tape recorders which use video tape for recording video, can perform programmed recording of programs based on an electronic program guide (EPG) received via broadcast signals or over the internet, etc.

The electronic program guide is updated on a regular basis, such as about a week, and the recording apparatus receives the latest electronic program guide every time the power is turned on and it enters an operational state, and the electronic program guide held in the device is updated with the latest received electronic program guide.

When programmed recording is selected via a key operation or the like, a selection of a program listed in the electronic program guide is accepted by displaying the electronic program guide held in the device to a built-in or an external display device, and programming recording by, for example, reading time information such as the broad cast date for the program, the program title, program information such as the broadcast channel, and so on of the selected program from the electronic program guide.

For series of a program broadcast on a regular basis such as daily or weekly, the recording apparatus is programmed to automatically perform recording at the preset time, daily or weekly, by adding a recording condition, performing checks daily or weekly, etc.

However, series part of whose program title or whose broadcast times change with every broadcast require programming recording for every episode, and the above-mentioned programmed series can suffer from recording mistakes if the broadcast time is moved due to, for example, live sporting events.

Accordingly, acquiring program information for a program series or the like, which has already been programmed from an electronic program guide, from the latest electronic program guide received after programming the series program, comparing the program title in the acquired program information with the program title designated by a user, and detecting (specifying) from the latest electronic program guide the program which has been programmed, and then automatically changing the preset settings for time information and so on based on the latest program information, or, after programming from the electronic program guide, specifying a television series from the latest electronic program guide based on the next number of broadcasts, etc., and causing the preset settings to reflect the program information of the specified program, has been proposed. (See, for example, Japanese Patent Laid-Open Publication. No. 2003-46921.)

Furthermore, automatically programming reception, specifying a designated program from program information on time designated for the same channel, when an electronic program guide is received in which program information is listed for each program on that broadcast channel on the broadcast date, by specifying the broadcast channel, broadcast date, and broadcast time of the program before receiving (publishing) the electronic program guide in which program information for a program for which reception is programmed is listed, in a television reception device capable of programming reception using an electronic program guide, has been proposed. (See, for example, Japanese Patent Laid-Open Publication No. 2000-341156).

### SUMMARY OF THE INVENTION

This type of recording apparatus, which is capable of performing the programmed recording described above, has the advantage of being able to record by automatically changing the settings if the broadcast time of a program is changed after recording is programmed due to, for example, circumstances at' the broadcast station, but is capable of handling only series programs listed in received electronic program guides, and since programs are only listed in electronic program guides up to around one week in advance, cannot perform programmed recording of programs later than that, or in other words, programs before they are listed in the received electronic program guide.

Therefore, making this type of recording apparatus capable of performing programmed recording of a program before it is listed in the electronic program guide is considered by specifying the broadcast channel and broadcast date and time of the program scheduled to be recorded before it is listed in the electronic program guide, like conventional television broadcast receiving devices capable of performing programmed reception using electronic program guides, but in this case the broadcast channel and broadcast date and time of the program scheduled to be recorded must be known ahead of time.

Accordingly, it is impossible to be programmed recording of programs before being listed in received electronic program guides of events whose location or date, etc., are known a long time before through announcements in newspapers or on television programs, such as, for example, soccer world cup qualifiers or finals matches (hereafter, "world cup matches"), but whose broadcast channel and time are not known, causing recording to be forgotten on occasion.

The present invention has as its object (first object) to make it possible to programmed recording of a program of an event whose broadcast channel or time is unknown, as described above, before being listed in the electronic program guide, and also has as its object (second object) to make it possible to perform recording with certainty even if the broadcast time of the program scheduled to be recorded is moved back due to a program immediately before running over time, etc., in this type of recording apparatus:

To achieve the first object, a recording apparatus of a first invention is a recording apparatus capable of programmed recording of a program onto a storage medium based on program information in an electronic program guide which is received, the apparatus including: a key entry unit for entering and setting prescribed characteristic information of an event scheduled to be recorded before receiving the electronic program guide in which the program information of a program of the event is received; and an event determining unit for searching through and specifying reception of the program information of a program of the event based on similarity between the characteristic information and the program information in the latest received electronic program guide and enabling programmed recording of a program of the event based on the specified program information.

Accordingly, with the first invention, when the event scheduled to be recorded is an event whose location or date, etc., is known a long time before through announcements in newspapers or on television programs, such as the world cup matches described above, but whose broadcast channel and time are not known, entering and setting prescribed characteristic information for the event scheduled to be recorded before receiving the electronic program guide listing program information of a program of the event makes it possible for a programmed recording function to automatically search through and specify reception of program information of a program of the event scheduled to be recorded based on similarity between the characteristic information and program information in the latest received electronic program guide.

Programs of events whose location or date, etc., are known a long time before through announcements in newspapers or on television programs, such as world cup matches, but whose broadcast channel and time are not known can thereby be recorded by programming (presetting) before they are listed in the electronic program guide, making it possible to prevent forgetting to record them, and thereby enabling improvement of usability and functionality of programmed recording.

The second invention is such that the prescribed characteristic information of the event scheduled to be recorded in the recording apparatus of the first invention includes keyword information at least related to a program title of the event.

Accordingly, with the second invention, a program of the event scheduled to be recorded, in which the prescribed characteristic information of the event scheduled to be recorded includes at least keyword information related to the program title of the event, such as, for example, the keyword information "world cup" for the above-mentioned world cup, is searched for and specified with a high degree of certainty.

Furthermore, a third invention is such that the prescribed characteristic information of the event scheduled to be recorded in the recording apparatus of the second invention contains time information on when the event takes place.

Accordingly, with the third invention, since the prescribed characteristic information of the event scheduled to be recorded includes not only keyword information related to the program title but also time information such as the date and time of when the event is to take place, a program of the event which is broadcast matching when the event will take place, such as the above-mentioned world cup matches, is searched for and specified with an even greater degree of certainty.

Further, a fourth invention is such that the prescribed characteristic information of an event scheduled to be recorded in the recording apparatus of the third invention is made up of keyword information related to a program title of the event and time information on when the event is to take place, and the event determining unit specifies as a program matching a program of the event a program in which a program title and broadcast time information in program information in a received electronic guide are similar to keyword information or time information of the event in terms of a prescribed matching condition, thereby making programmed recording possible of a program of the event based on the program information of the matching program.

Accordingly, with the fourth invention, the prescribed characteristic information of the event scheduled to be recorded is made up of keyword information related to the program title of the event and time information of the event, so that not only can a program of the event scheduled to be recorded by searched for with a high degree of certainty based on both the keyword information related to the program title of the event and the time information of the event as with the third invention, but furthermore the programmed recording function can specify as a program matching a program of the event a program in which a program title and broadcast time information in the program information in the received electronic guide are similar to keyword information or time information of the event in terms of a prescribed matching condition. Accordingly, a program of the event scheduled to be recorded listed in the electronic program guide can be specified with even greater certainty by tolerating a certain amount of discrepancy between a program title or broadcast time and keyword information and time information of the event, thereby making it possible to programmed recording of a program of the event such as a world cup match before it is listed in an electronic program guide using a highly reliable and practical method.

Further, a fifth invention is such that the event determining unit in the recording apparatus of the fourth invention selects programs for which a program title and broadcast time information in program information in a received electronic program guide are similar to keyword information related to a program title and time information of the event scheduled to be recorded within a range equal to or greater than a prescribed similarity condition and less than a prescribed matching condition and establishes the selected programs as candidate programs of the event, thereby, through selection of whether or not to record the candidate programs, making programmed recording possible of a program of the event based on program information of the candidate programs selected for recording.

Accordingly, with the fifth invention, programmed recording of programs in the electronic program guide for which a program title and broadcast time information in the program information are similar to keyword information related to a program title and time information of the event scheduled to be recorded within a range equal to or greater than a prescribed similarity condition and less than a prescribed matching condition, or in other words programs in the electronic program guide with a high similarity, even without the high degree of matching as in the fourth invention, which are likely to be of the event to be recorded, by deciding upon a program of the event scheduled to be recorded based on a user selection, thereby making it possible to accurately specify, without missing due to a certain amount of mismatching of information, reception of program information of a program of the event scheduled to be recorded, and thereby ensure programmed recording with an even greater degree of certainty.

In addition, to achieve the second objective, a sixth invention is such that any one of the first through fifth inventions is provided with a recording extension function for extending an ending time of recording time of a program of an event scheduled to be recorded beyond an ending time in broadcast time information in program information in a received electronic program guide through selection of extension of recording.

Accordingly, with the sixth invention, the recording extension function can, based on selection of recording extension, extend the programmed recording time of a program of an event scheduled to be recorded beyond a time in broadcast time information in program information in a received electronic program guide, and set the preset time for recording in anticipation of changes (extensions), etc., of the broadcast time, thereby making it possible to perform programmed recording with certainty even if the broadcast time of the program scheduled to be recorded is moved due to extension of the broadcast time of the previous program and the like.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### BRIEF DESCRIPTION OF THE DRAWINGS

FIG. 1 is a circuit block diagram of a recording apparatus according to an embodiment of the present invention.
FIG. 2 is a flowchart of entering and setting event information on programmed recording according to an embodiment of the present invention.
FIG. 3 is a flowchart of deciding upon a program for programmed recording according to an embodiment of the present invention.
FIG. 4 is a flowchart of notifying a user of similar programs according to an embodiment of the present invention.
FIG 5 is a flowchart of selecting to extend a time for programmed recording according to an embodiment of the present invention.
FIG 6 is a flowchart of setting a time extension for programmed recording according to an embodiment of the present invention.

### DETAILED DESCRIPTION OF THE PREFERRED EMBODIMENT

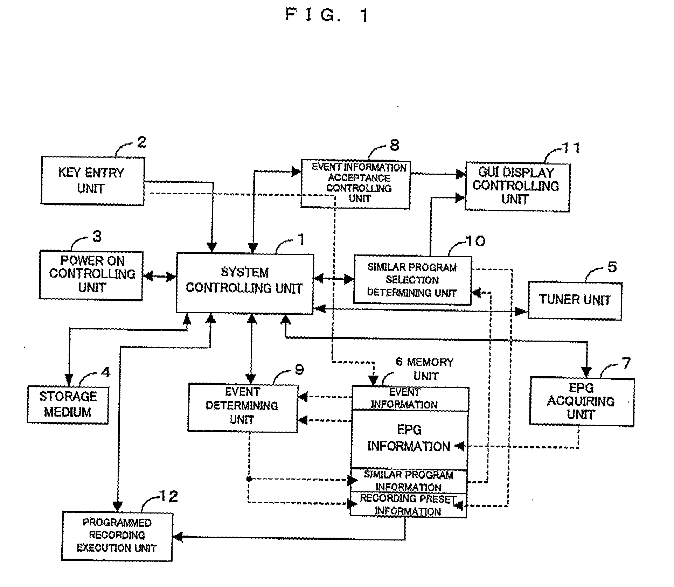

Next, a detailed description of an embodiment is given, with reference to Figs. 1 to 6, in order to describe the present invention in greater detail. Note that while the following description of the present embodiment uses a large-capacity hard disk as an example of a storage medium, and a video recorder (video recording and playback device) capable of programmed recording of programs broadcast on television as a specific example of a recording apparatus of the present invention, it is hereby stated that neither of these in any way limits the present invention.

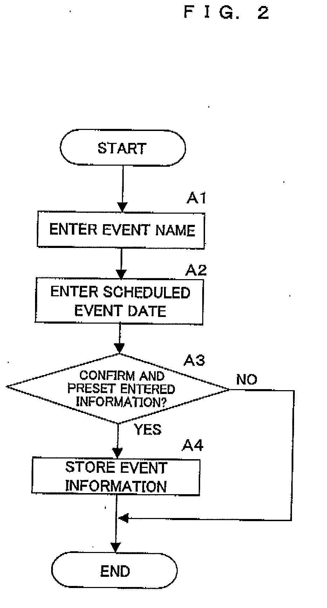

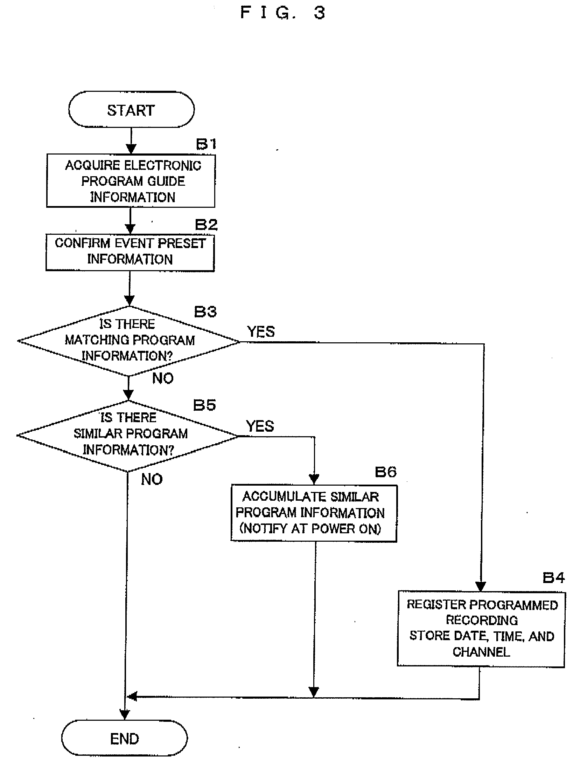

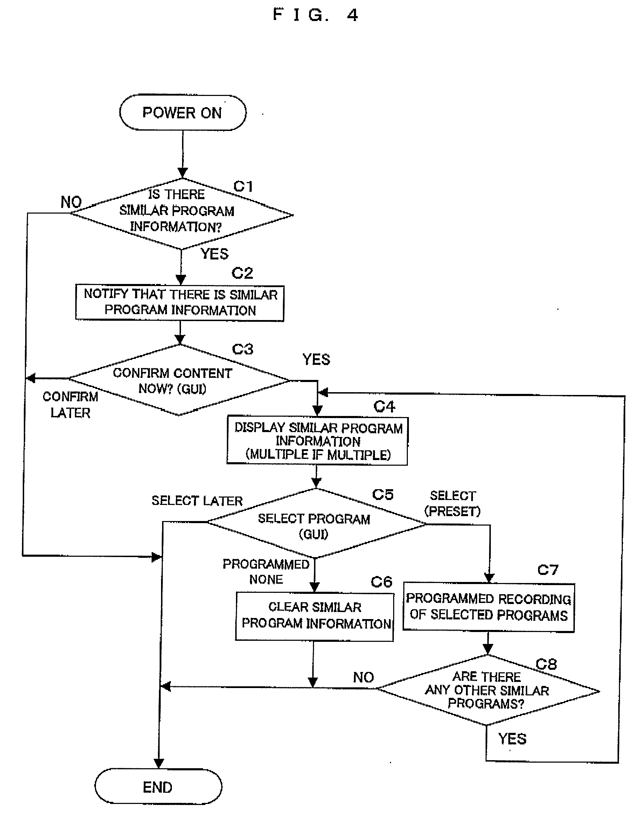

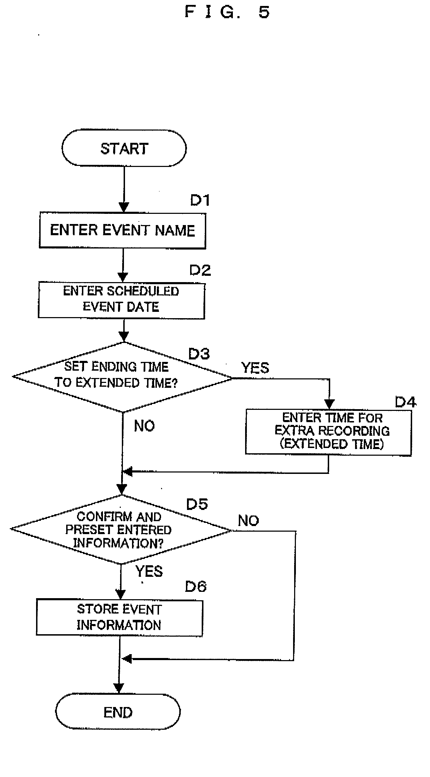

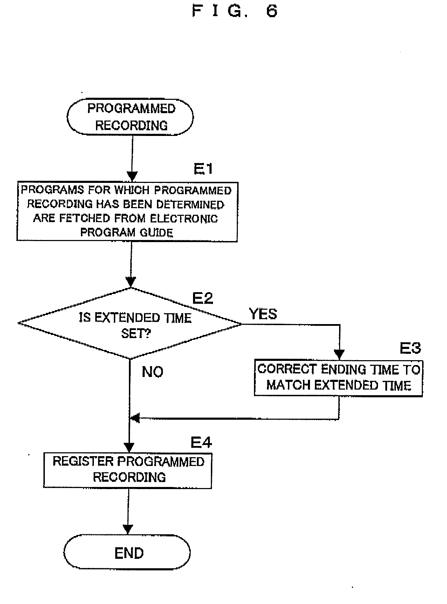

FIG 1 is a circuit block diagram of a recording apparatus. FIG 2 shows a flowchart of entering and setting event information on programmed recording, FIG. 3 is a flowchart of deciding upon a program for programmed recording, and FIG 4 shows a flowchart of notifying a user of similar programs. Further, FIG. 5 is a flowchart of selecting to extend a time for programmed recording, and FIG. 6 is a flowchart of setting a time extension for programmed recording.

As shown in FIG. 1, the recording apparatus of the present invention is formed from a system controlling unit 1 for performing overall control and processing, to which are connected a key entry unit 2, a power on controlling unit 3, a storage medium 4 such as a large-capacity hard disk, a tuner unit 5 for receiving announcements through television programs and the like on terrestrial waves or satellite broadcasts, and a memory unit 6 made up of a RAM, a flash memory, or the like, and additionally an electronic program guide acquiring unit (hereafter, "EPG acquiring unit") 7, an event information acceptance controlling unit 8, an event determining unit 9, a similar program selection determining unit 10, a GUI (Graphical User Interface) display controlling unit 11, a programmed recording execution unit 12, and so on. Note also that the solid-line arrow in FIG. 1 indicates the flow of control, while the dotted-line arrow indicates the flow of information (data).

Further, the system controlling unit 1, the EPG acquiring unit 7, the event information acceptance controlling unit 8, the event determining unit 9, the similar program selection determining unit 10, the GUI display controlling unit 11, the programmed recording execution unit 12, and so on, are formed by a microcomputer, and the microcomputer, together with the memory unit 6, forms a programmed recording function and a recording extension function of the present invention by executing a programmed recording program based on selection, etc., by a user of programmed recording.

The programmed recording function makes it possible to programmed recording of events, whose location or date, etc., are known a long time before through announcements in newspapers or on television programs, such as world cup matches, but whose broadcast channel and time are not known, before being listed in the electronic program guide, and, in conjunction, the recording extension function makes it possible to perform recording with certainty even if the broadcast time of a program scheduled to be recorded is moved due to an extension of the broadcast, etc., of the immediately preceding program.

Incidentally, the electronic program guide (EPG) has program information including program titles and broadcast times for each channel for up to around one week in advance. The EPG acquiring unit 7 runs when the power is turned on to the device, automatically receives (acquires) the latest electronic program guide via reception of the tuner unit 5 or internet connection, and automatically updates the existing electronic program guide (EPG) information held in the memory unit 6 by overwriting with the latest electronic program guide.

The event information acceptance controlling unit 8 rewrites and thereby freely accepts and registers entered information on events scheduled to be recorded accepted by the key entry unit 2, and accepts and registers prescribed characteristic information of events scheduled to be recorded in the programmed recording, described below, of the present invention.

The event determining unit 9 searches for and specifies reception of the program information of programs of the events based on similarity between the characteristic information and program information in the latest received electronic program guide, and determines programs which match and programs which are similar to programs of events scheduled to be recorded. The similar program selection determining unit 10 determines preset information by accepting a selection by a user of similar programs. The GUI display controlling unit 11 supplies, to an built-in or a separate liquid crystal display device or other such screen display device, display signals such as OSD signals of graphical menus such as an information entry menu of events scheduled to be recorded or a selection guide menu of the similar program selection determining unit 10. The programmed recording execution unit 12 presets recording of programs of events scheduled to be recorded and registers the preset information.

Next, specific operations and processes of programmed recording are described. First, a process of entering and setting characteristic information of an event scheduled to be recorded is described with reference to the flowchart in FIG 2.

Recording is preset by a user selecting a recording mode through a menu selection and the system controlling unit 1 executing the procedure (control sequence) in the flowchart of steps A1 to A4 in FIG. 2.

Incidentally, the location or date, etc., of events such as soccer world cup matches scheduled to be recorded is known a long time before through announcements in newspapers or on television programs, but their broadcast channel or time is not known before being listed in the electronic program guide.

Entering characteristic information of an event scheduled to be recorded makes it possible to search for and specify a program of the event listed in the electronic program guide of a later date, so that the characteristic information need only include at least keyword information related to the program title of the event, such as very simply "world cup," for example. Further noting that the broadcast date of this type of event is generally on the day the event takes place or the day before or after (keeping in mind events in foreign countries), the characteristic information preferably also contains time information such as the date and time of when the event takes place, in order to improve searching accuracy.

Accordingly, in the case of the present embodiment when presetting recording according to the present invention before receiving the electronic program guide in which a program of the event is listed, the keyword information and the time information are entered by key operation (steps A1 and A2) as the characteristic information of the event scheduled to be recorded, and, as shown by the dotted-line arrow in FIG. 1, both types of information are fetched in the event information acceptance controlling unit 8 from the key entry unit 2.

The entered keyword information and time information are displayed to the display device via the GUI display controlling unit 11, a confirmation of the entered information and a judgment whether or not to preset are sought (step A3). When the user decides upon presetting via a key operation, both types of information are written as event information to the memory unit 6 and the characteristic information of the event is set (stored) (step A4).

Next is described the procedure for setting programmed recording by specifying a program of an event based on the characteristic information of the entered and set event and the program information of each program in the electronic program guide received thereafter, with reference to the flowchart of steps B1 to B6 in FIG. 3 and the flowchart of steps C1 to C8 of FIG. 4.

First, when the characteristic information of an event is entered and set, the process of steps B1 to B6 in FIG 3 is executed. Each time the power to the device is turned on a new electronic program guide is received, and the EPG acquiring unit 7 rewrites the electronic program guide (EPG) information held in the memory unit 6 with the latest electronic program guide. Every time this happens, the event determining unit 9 fetches the program information of each program listed in the latest electronic program guide in the memory unit 6 (step B1), and the event determining unit 9 verifies the keyword information and time information entered and set as the characteristic information (step B2), determines the similarity between the verified keyword information and time information and the title and broadcast time information in the program information of each program in the electronic program guide in the memory unit 6, and automatically searches for and specifies reception of the program information of the program of the event scheduled to be recorded.

Here, the determination of similarity is performed in order to detect programs of events for recording from, the latest electronic program guide in the memory unit 6, but it is very rare that the title and broadcast time information in the program information, even for programs which are of the event to be recorded, perfectly matches the keyword information and the time information of the event to be recorded. Therefore, in order to specify the program of the event to be recorded with certainty, allowing for a certain amount of discrepancy, matching program determination criteria are set to the event determining unit 9 as prescribed matching conditions, such as, for example, "there is only one program for which the broadcast time information is on the same day as the time information of the event to be recorded and there is at least an 80% match between the title and the keyword information of the event to be recorded. "

The event determining unit 9 searches for reception of program information of a program of the event scheduled to be recorded based on the matching program determination criteria, and when a program is found which satisfies the matching program determination criteria and is at least as similar as the prescribed matching conditions, the event determining unit 9 specifies reception of the program information of the program of the event scheduled to be recorded (step B3), and writes to the memory unit 6 as programmed recording information settings necessary for programmed recording, such as the broadcast channel and broadcast time, etc., of the event scheduled to be recorded based on the program information of the program specified in the electronic program guide (step B4). Further, the programmed recording execution unit 12 is instructed to programmed recording based on the programmed recording information in the memory unit 6 via the system controlling unit 1, thereby making it possible to programmed recording of the event scheduled to be recorded entered and set before being listed in the electronic program guide.

Accordingly, a program of an event like a world cup match can be preset in advance and recorded with certainty before being listed in the electronic program guide, thereby significantly improving usability and functionality compared to setting programmed recording after the program is listed in the electronic program guide.

Incidentally, some events scheduled to be recorded may not be detected by matching detection based on the matching program determining criteria. Accordingly, the following similar program determining criteria are also set in the event determining unit 9 of the present embodiment.

The similar program determining criteria are criteria for establishing as candidate programs of the event programs for which a program title and broadcast time information in program information in the electronic program guide are similar to the keyword information and the time information of the event scheduled to be recorded within a range equal to or greater than a similarity condition and less than a prescribed matching condition of the matching program determining criteria; being, for example, the criteria of a similarity condition such as "a program for which the broadcast information is on the day of the time information of the event to be recorded (the planned preset day) or the day before or after thereof and there is at least a 60% match between the program title and the keyword information of the event to be recorded."

If the event determining unit 9 determines that there are no programs which match in step B3, it searches for programs which are similar based on the similar program determining criteria (step B5), and selects and establishes as candidate programs of the event programs in the electronic program guide for which a program title and broadcast time information in the program information are similar to keyword information and time information of the event scheduled to be recorded within a range equal to or greater than the prescribed similarity condition and less than the prescribed matching condition, or in other words programs which cannot be determined to be perfectly matching, but which are similar to at least a certain degree and which are likely to be of the event to be recorded, holds the program information of the candidate programs in the memory unit 6 as similar program information, and, at the same time, automatically turns on the power to the device by the power on controlling unit 3 and displays a notice that there are candidate programs (similar programs) to the display device via the GUI display controlling unit 11 from the similar program selection determining unit 10 (step B6).

Next, the procedure moves to the process of steps C1 to C8 in FIG. 4, the display of the notice that there are candidate programs (similar programs) in steps C1 and C2 which are steps B5 and B6 is performed, and a selection is sought from the user whether or not to set the candidate programs as programs of the event scheduled to be recorded. If the user notifies through key operation that the selection will be made later, the process is ended as it is, and the procedure enters a standby state for the selection.

On the other hand, if the user notifies through key operation that the content will be checked and a selection made immediately, the procedure moves to step C4 from step C2 via step C3, and the similar program information for each candidate program in the memory unit 6 is read and display to the display device via the similar program selection determining unit 10 and the GUI display controlling unit 11 (step C4).

The user then selects through key operation whether or not to programmed recording for each candidate program, or whether to make the decision (selection) later. If making the selection later is selected, the procedure returns to step C5, ends as it is, and enters standby state for program selection for programmed recording. If none of the candidate programs are selected as programs for programmed recording, the procedure moves from step C5 to step C6, the similar program information in the memory unit 6 is cleared and the process is ended.

On the other hand, if the user selects a candidate program for programmed recording, the procedure moves from step C5 to step C7, required settings for programmed recording of program information of the selected candidate program is written to the memory unit 6 as programmed recording information, and the programmed recording execution unit 12 is instructed to execute programmed recording, making programmed recording possible of events scheduled to be recorded which are entered and set before being listed in the electronic program guide based on the candidate programs which do not perfectly match (step C7).

If unselected candidate programs remain, the procedure returns to step C4 via step C8 and the same procedure repeats for all candidate programs.

Accordingly, programs in the electronic program guide for which the keyword information and time information of the event scheduled to be recorded do not match highly but which are similar to at least a certain degree and are likely to be of the event to be recorded can be established as programs of the event scheduled to be recorded based on the selection of the user. Consequently, reception of program information of programs of the event scheduled to be recorded can be specified with certainty without missing due to a certain amount of mismatching in the information, and preset for recording can be performed with an even greater degree of certainty, thereby making it possible to improve usability and functionality.

Next, in order to enable recording with certainty even in a case in which the broadcast time of a program scheduled to be recorded is moved due to an extension of the broadcast time, etc., of the preceding program, the recording extension function described above is formed by the system controlling unit 1, and the event information acceptance controlling unit 8, and so on.

In order to enable presetting recording in which the recording extension function extends the recording time beyond the original time of the program information, the entering and setting of the characteristic information of the event scheduled to be recorded is performed in the procedure shown in steps D1 to D6 in FIG. 5.

Steps D1, D2, D5, and D6 in FIG 5 are the same process steps as steps A1, A2, A3, and A4 in FIG 2, and steps D3 and D4 are steps of the process based on the recording extension function.

When keyword information and time information of the event scheduled to be recorded are entered and set in steps D1 and D2, the event information acceptance controlling unit 8 displays a selection screen whether or not to extend the recording time by pushing back the ending time of the recording to the display device via the GUI display controlling unit 11 under control of the system controlling unit 1 (step D3). If the user selects to extend recording, the display screen switches to a selection screen for extended times of, for example, 30 minutes, 1 hour, 1 hour and 30 minutes, and so on, and selection (entry) of the extended time (extra time for recording) is sought from the user (step D4). When the extended time is selected and entered, the procedure moves to step D6 via step D5, and the information of the extended time is also held in the memory unit 6 as event information.

Next, the actual time extension of the programmed recording is performed by, for example, the procedure of steps E1 to E4 in FIG. 6.

With the process of steps D1 to D6 in FIG 5, setting and entry (storage of event information) of characteristic information of the event scheduled to be recorded, including the extension of the recording time, is performed. When the programmed recording is determined after passing through the process of steps B 1 to B6 in FIG. 3 and the process of steps C1 to C8 of FIG. 4, the system control unit 1 fetches the time information of the program programmed to be recorded from the electronic program guide in the memory unit 6 (step E1).

The presence or absence of a selection of recording extension for the program is determined based on the presence or absence of information on extended time in the memory unit 6 (step E2). If recording extension is selected, the ending time of the recording time of the programmed recording information in the memory unit 6 is extended (corrected) by the amount of the selected time beyond the ending time in the broadcast time information in the program information in the electronic program guide (steps E3 and E4).

Accordingly, if there is a possibility that the beginning or ending of a program of the event scheduled to be recorded might be moved due to extended broadcast of the immediately preceding program, etc., selecting extension of the recording time sets the recording time in anticipation of a change (extension), etc., in the broadcast time, making it possible to record the program of the desired event with certainty, regardless of any movement, etc., of the broadcast time, thereby improving the programmed recording performance, etc.

The present invention is not limited to the present embodiment described above, and many variations aside from the above are possible within a scope in which the subject matter is not departed from. For example, the procedure, etc., of presetting recording or of extending recording time may, of course, be of any form. Furthermore, the characteristic information of the event scheduled to be recorded may be only the keyword information related to the program title, or may be a plurality of keywords of keyword information.

Furthermore, the circuit configuration of the device may of course differ from FIG 1. In particular, the storage medium 4 may be a rewritable DVD or video tape, etc. in lieu of a hard disk, and may be a combination, etc., of a plurality of media including hard disk, DVD, video tape, and so on.

The present invention can be applied to programmed recording in many different recording apparatuses with a configuration of a recording apparatus or a recording and playback apparatus capable of performing programmed recording of programs onto a storage medium based on program information in electronic program guides which are received.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within the true scope of the invention.

With the present invention, based on prescribed characteristic information of an event scheduled to be recorded being entered and set via a key entry unit 2 before receiving an electronic program guide listing program information of a program of the event scheduled to be recorded, an event determining unit 9 searches for and specifies reception of program information of a program of the event based on similarity between the characteristic information and program information in a latest received electronic program guide, making programmed recording possible of a program of the event based on the specified program information, thereby allowing recording by advance presetting of a program of an event scheduled to be recorded whose broadcast channel and time are unknown, before being listed in the electronic program guide.

## Claims

1. A recording apparatus capable of programmed recording of a program onto a storage medium based on program information in an electronic program guide which is received, the apparatus comprising:
a key entry unit for entering and setting prescribed characteristic information of an event scheduled to be recorded before receiving said electronic program guide in which said program information of a program of said event is received; and
an event determining unit for searching through and specifying reception of said program information of said program of said event based on similarity between said characteristic information and said program information in said latest received electronic program guide and enabling programmed recording of said program of said event based on said specified program information.

2. The recording apparatus according to claim 1, wherein said prescribed characteristic information of said event scheduled to be recorded includes at least keyword information related to a program title of said event.

3. The recording apparatus according to claim 2, wherein said prescribed characteristic information of said event scheduled to be recorded includes time information on when said event is to take place.

4. The recording apparatus according to claim 1, wherein said prescribed characteristic information of said event scheduled to be recorded comprises keyword information related to a program title of the event and time information on when said event is to take place, and said event determining unit specifies as a program matching a program of said event a program in which a program title and broadcast time information in program information in a received electronic guide are similar to keyword information or time information of said event in terms of a prescribed matching condition, thereby making programmed recording possible of a program of said event based on said program information of said matching program.

5. The recording apparatus according to claim 4, wherein said event determining unit selects programs for which a program title and broadcast time information in program information in a received electronic program guide are similar to keyword information related to a program title and time information of said event scheduled to be recorded within a range equal to or greater than a prescribed similarity condition and less than a prescribed matching condition and establishes said selected programs as candidate programs of said event, thereby, through selection of whether or not to record said candidate programs, making programmed recording possible of a program of said event based on program information of said candidate programs selected for recording.

6. The recording apparatus according to any one of claims 1 to 5, comprising a recording extension function for extending an ending time of a recording time of a program of an event scheduled to be recorded beyond an ending time in broadcast time information in program information in a received electronic program guide through selection of extension of recording.
